(19) Europäisches Patentamt
European Patent Office
Office européen des brevets

(11) **EP 2 622 602 B1**

(12) **FASCICULE DE BREVET EUROPEEN**

(45) Date de publication et mention de la délivrance du brevet:
**06.01.2016 Bulletin 2016/01**

(21) Numéro de dépôt: **11771211.7**

(22) Date de dépôt: **28.09.2011**

(51) Int Cl.:
***G11B 7/243*** *(2013.01)*

(86) Numéro de dépôt international:
**PCT/FR2011/000529**

(87) Numéro de publication internationale:
**WO 2012/042129 (05.04.2012 Gazette 2012/14)**

(54) **SUPPORT D'INFORMATION OPTIQUEMENT ENREGISTRABLE ET A ENREGISTREMENT LEGALEMENT SUR.**

OPTISCHES AUFZEICHNUNGSMEDIUM UND AUFZEICHNUNG MIT LEGALER SICHERHEIT

OPTICALLY RECORING MEDIUM AND LEGALLY SECURE RECORDING

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **29.09.2010 FR 1003848**

(43) Date de publication de la demande:
**07.08.2013 Bulletin 2013/32**

(73) Titulaire: **Laude, Lucien Diégo**
**65140 Rabastens de Bigarre (FR)**

(72) Inventeur: **Laude, Lucien Diégo**
**65140 Rabastens de Bigarre (FR)**

(56) Documents cités:
**EP-A1- 1 426 941**     **JP-A- 11 034 501**
**JP-A- 2000 187 884**

Remarques:
Le dossier contient des informations techniques présentées postérieurement au dépôt de la demande et ne figurant pas dans le présent fascicule.

**EP 2 622 602 B1**

## Description

La présente invention concerne de manière générale un support d'information enregistrable (par exemple un *medium* CD-R), par exemple sous la forme d'un disque compact, qui est ineffaçable, à grande sécurité d'enregistrement et légalement sûr.

Typiquement, un medium CD-R est constitué d'un disque plat en polycarbonate, recouvert sur l'une de ses faces principales, d'un film sensible à la lumière. En irradiant le film avec un faisceau de lumière émis par exemple par une diode laser de 10 mW (dite diode d'écriture), des transformations locales dudit film sont produites. Ces transformations peuvent induire une modification mesurable des propriétés physiques du film, en particulier sa réflectivité optique. Cette modification est en particulier exploitée pour, à la fois, incorporer l'information sur le CD-R et ensuite la lire.

L'information proprement dite est inscrite sur le film sous une forme digitalisée comme une succession codée de zones ou taches circulaires traitées et transformées par laser (désignées généralement par le terme anglais *« spots »*), de taille submicronique. Habituellement, ces taches sont distribuées le long d'une piste en forme de spirale elliptique qui est dessinée sur le disque en utilisant un système de balayage standard connue de l'état de l'art.

Le CD-R doit présenter, en vue de son utilisation, les deux caractéristiques essentielles suivantes :

a) la sensibilité du film vierge à la lumière qui est émise par la diode-laser d'écriture, et promouvant une transformation du film détectable optiquement, formant ainsi des taches produites par le traitement laser: une telle transformation peut être engendrée par divers procédés : fusion, blanchissement, évaporation, création d'une rugosité, ablation, cristallisation d'un film amorphe ou modification de la chimie du film, par exemple lors de la synthèse d'un composé ;

b) la stabilité morphologique du film par rapport aux conditions ambiantes, telles que la température, la lumière visible, l'humidité, un champ magnétique ou une altération mécanique (avec un outil ou lors d'une manipulation), stabilité qui se rapporte à la fois aux taches et à la surface du film qui n'est pas traitée par le laser.

Après avoir inscrit les taches et, ce faisant, avoir enregistré l'information, celle-ci doit être lue par voie optique. A cette fin, la lumière émise par une diode (qui est une diode dite de «lecture») ou un LED (acronyme pour designer un dispositif émetteur de lumière, en anglais *«light-emitting device»*) est balayée sur la piste elliptique et la lumière réfléchie par le film est détectée et enregistrée. Le faisceau émis par la diode de lecture est continu et monochromatique. Il travaille à une longueur d'onde $\lambda_R$ comprise entre 500 et 750 nm, soit à une énergie photonique comprise entre 2,4 eV et 1,65 eV. L'intensité du faisceau de la diode de lecture est très inférieure à celle de la diode d'écriture, typiquement de l'ordre de 1 mW. Toute transformation morphologique locale du film doit produire une modification locale de la réflectivité du film qui est alors mesurée et détectée avec la diode de lecture. Si cette modification est évaluable, l'enregistrement dé la lumière réfléchie par le film permet la lecture de l'information après décodage de l'inscription digitalisée.

Habituellement, on définit comme suit un contraste de lecture C entre les taches traitées par le laser et les parties vierges du film :

$$C = (Rv - Rs) / (Rv + Rs),$$

où :

- Rv désigne la valeur de la réflectivité (mesurée à $\lambda_r$) du film vierge, et
- Rs désigne la valeur de la réflectivité (mesurée à $\lambda_r$) des taches.

L'amplitude de ce contraste C est importante pour évaluer l'aptitude du CD-R à enregistrer l'information.

Cependant, la préservation sur le long terme de l'information enregistrée est beaucoup plus problématique et lourde de conséquences, que la seule amplitude de ce contraste.

En effet, tout matériau qui se transforme facilement en absorbant une faible quantité d'énergie lumineuse peut aussi bien être sensible à de faibles fluctuations des conditions ambiantes (par exemple la température).

En d'autres termes, la sensibilité à la lumière et la stabilité morphologique agissent dans des directions opposées: l'écriture à faible énergie ne prédispose pas à une stabilité à long terme.

Les CD-Rs actuels possèdent un film fortement sensible a la lumière qui est constitué d'un mélange de produits organiques (chimiques, polymères). L'enregistrement d'une information sur de tels films est facilement réalisé en transformant localement le film, par exemple en changeant sa couleur (et sa réflectivité) ou en ablatant le film suite à l'absorption de la lumière et de la génération de chaleur qui en résulte. Le contraste optique C ainsi obtenu est typiquement de l'ordre de 0,30 et les appareils contemporains de gravure de CD-Rs sont réglés pour lire un tel contraste.

Bien que cette sensibilité à la lumière présente l'avantage d'enregistrer facilement une information, elle a pour conséquence une fragilité élevée des CD-R actuels, en particulier vis-à-vis de la chaleur dès que ces médias sont exposés à la lumière ambiante pendant un certain temps.

Etant sensibles à l'ambiant d'une façon imprévisible, ces *media* ne sont pas considérés être sûrs, en particulier sur le long terme. Ceci est particulièrement critique pour des informations importantes qui doivent être archivées dans des conditions de sécurité absolue, et en particulier des données médicales, légales ou militaires.

La conséquence principale de cette situation est que l'enregistrement sur les CD-R actuels ne peut prétendre à une légitimité légale.

Une autre conséquence est qu'elle oblige à réenregistrer à intervalles rapprochés la même information sans pour autant assurer sa sécurité.

Il y a donc un besoin pour des CD-Rs de grande fiabilité sur lesquels l'information enregistrée serait totalement insensible aux conditions ambiantes, pendant des périodes de temps très étendues (par exemple au-delà de vingt ans), de sorte qu'un tel enregistrement pourra alors être considéré comme permanent.

La présente invention vise donc à résoudre ces problèmes et inconvénients, en apportant des moyens propres à assurer un enregistrement sécurisé et permanent de l'information sur un CD-R.

Le demandeur a découvert de manière surprenante que par le choix spécifique d'un élément tel que l'aluminium pour constituer la couche supérieure permet d'améliorer le contraste optique entre zones irradiées et zones non irradiées. JP11034501 décrit un support d'information enregistrable comprenant un disque plat en polycarbonate et un film d'enregistrement optique multicouche comprenant une couche d'indium de 20 nm d'épaisseur et une couche de bismuth de 20 nm. Par contre, le film de JP 11034501 ne comporte pas de couche d'aluminium, ni a *fortiori* de couche extérieure d'aluminium.

JP2000187884 décrit un support d'information enregistrable comprenant un disque plat en polycarbonate et un film d'enregistrement optique multicouche comprenant une couche de 10 à 25 nm d'un élément choisi dans le groupe comprenant (Sb, Ge, Te, Se et Si), et une couche de 5 à 20 nm d'épaisseur d'un élément d'un élément choisi parmi In, Al et Ga. JP2000 187884 ne décrit pas explicitement un film comportant des couches d'épaisseurs sensiblement identiques et dont la couche extérieure est en aluminium.

La présente invention a donc pour objet un support d'information enregistrable comprenant :

- un disque plat en polycarbonate présentant deux faces principales, et
- un film sensible à la lumière recouvrant l'une desdites faces principales et sur lequel de l'information peut être enregistrée.

Selon l'invention, le film est un film multicouche comprenant au moins deux couchés élémentaires superposées respectivement composées d'un élément A et d'un élément B, lesdites couches se répartissant comme suit :

  o l'une des couches étant constituée d'un élément choisi dans le groupe IIIa, tandis que l'autre couche est constituée d'un élément choisi dans les groupes Va ou VIa, et
  o l'une des couches étant constituée d'un élément choisi dans les groupes IIa ou IIb, tandis que l'autre couche est constituée d'un élément choisi dans le groupe VI, ou

l'épaisseur de chaque couche étant sensiblement identique et l'épaisseur totale du film sensible à la lumière étant d'au moins 35 nm, et de préférence d'au moins 40 nm.

Le film sensible selon l'invention est ainsi essentiellement défini par deux caractéristiques :

- d'une part le composé AB (par exemple AlTe) dont la synthèse peut être avantageusement provoquée par l'irradiation d'un faisceau laser (dit «procédé d'écriture par synthèse laser »), qui est un procédé exploité dans le cadre de la présente invention conduisant à un meilleur contraste de l'écriture sur le film sensible, et
- d'autre part par l'épaisseur du film, et par conséquent les épaisseurs individuelles de matière A et B qui sont superposées pour former le film.

Le composé AB est covalent. Au contraire des alliages métalliques, les composés dits covalents associent par des liaisons interatomiques fortes des éléments appartenant respectivement aux colonnes suivantes du Tableau Périodique des Eléments :

- II B (dont Cd et Zn) et VI A (dont Se et Te),
- III A (dont Al et In) et V A (dont As et Sb),
- III A et VI A.

Le choix du composé AB se porte sur celui qui offre le contraste optique le plus élevé vis-à-vis du film vierge au moment de la lecture de l'information gravée sur le film.

Dans une forme avantageuse du procédé d'écriture par synthèse laser, le choix se porte sur le composé AlTe, quand la couche élémentaire supérieure contient Al.

En ce qui concerne plus particulièrement l'épaisseur du film sensible, pour toute épaisseur inférieure à 35nm, le film est habituellement semi-transparent avant même toute irradiation laser quel que soit le choix des éléments présents dans le film ce qui réduit le contraste de lecture après synthèse de tout composé.

D'autre part, plus grande est l'épaisseur du film, plus importante est l'intensité du faisceau laser utilisée pour synthétiser le composé dans ce film, celle-ci étant sensiblement proportionnelle au volume de matière contenue dans le film, c'est-à-dire à son épaisseur.

Un compromis doit donc être défini qui optimise le choix de l'épaisseur du film vis-à-vis de l'intensité des faisceaux laser d'écriture couramment utilisés pour graver un CD-R, tout en préservant le contraste optique défini par le choix des éléments A et B.

Enfin, l'épaisseur d'un film tel que fabriqué est définie avec une précision qui est de l'ordre de 2 à 5nm. Cette précision affecte chaque couche élémentaire contenant un des éléments et participant à l'épaisseur totale du film sensible. Plus faible est l'épaisseur d'une couche élémentaire, plus grande est l'incertitude d'obtenir un rapport des épaisseurs des couches élémentaires en A et B en proportion exacte correspondant à la composition stoechiométrique du composé choisi.

Par conséquent, dans la forme la plus avantageuse de l'utilisation du procédé de synthèse laser d'un composé covalent, l'épaisseur optimale du film est de 40nm, ce film étant constitué de deux couches superposées d'épaisseurs identiques 20 nm, et contenant chacune un seul élément : Te dans la couche inférieure (directement déposée sur le support) et Al dans la couche supérieure.

Mais il est possible que le film sensible du support selon l'invention présente une épaisseur de l'ordre de 35nm, et qu'il soit constitué de deux couches superposées d'épaisseurs identiques voisines de 18nm chacune et contenant chacune un seul élément (soit Te, soit Al).

Dans d'autres formes possibles du support d'information enregistrable selon l'invention, la couche sensible est composée de deux couches élémentaires (en Te ou Al) superposées, d'épaisseurs identiques pouvant atteindre 25nm (pour une épaisseur totale du film sensible de 50nm) ou 30nm (pour une épaisseur totale de ce film de 60nm).

Dans toutes ces configurations du film sensible, la couche élémentaire qui est au contact direct du support est toujours constituée de Te et la couche supérieure qui lui est superposée est toujours constituée de Al.

Selon un premier mode de réalisation particulièrement avantageux selon l'invention, le film multicouche est constitué de la superposition de deux couches élémentaires ayant chacune une épaisseur comprise entre 18 et 30 nm, et de préférence de l'ordre de 20 nm. Le film est opaque à la lumière ambiante.

De préférence, il s'agit de préférence d'un film multicouche constitué de deux couches, se répartissant comme suit à partir du disque plat en polycarbonate :

- une couche inférieure de tellure ou d'antimoine, qui recouvre le disque plat, et
- une couche supérieure d'aluminium recouvrant complètement ladite couche inférieure.

Selon un deuxième mode de réalisation particulièrement avantageux de la présente invention, le film multicouche est constitué de quatre couches élémentaires ayant chacune une épaisseur de l'ordre de 10 nm.

De préférence, il s'agit d'un film constitué de quatre couches se répartissant comme suit à partir du disque plat en polycarbonate :

- une couche inférieure de tellure, qui recouvre le disque plat,
- une première couche intermédiaire d'aluminium recouvrant complètement ladite couche inférieure de tellure,
- une deuxième couche intermédiaire de tellure, recouvrant complètement la première couche intermédiaire d'aluminium, et
- une couche supérieure d'aluminium, recouvrant complètement la deuxième couche intermédiaire de tellure.

De préférence, quel que soit la configuration du film sensible envisagée, la couche extérieure du film multicouche est avantageusement une couche d'aluminium, qui procure une réflectivité élevée à la lumière visible émise par une diode de lecture standard. Par ailleurs, dès que cette couche est produite, puis exposée à l'air, une couche très mince d'oxyde (de 2 nm d'épaisseur environ) se développe à sa surface. Etant dense, cette couche d'oxyde protège le film de dommages mécaniques modérés et des contaminations occasionnelles de l'ambiant.

D'autres composés contenant de l'Aluminium peuvent être utilisés sur un disque CD-R, par exemple avec les couples d'éléments suivants : Al/Sb, Al/Se, et Al/As.

Seuls les composés AlTe et $Al_2Te_3$ ont une absorption optique dans l'infrarouge (<1200 nm, soit >1,2 eV) qui ouvre accès au contraste optique C le plus élevé possible.

La présente invention a encore pour objet un procédé pour enregistrer de manière sécurisée et durable une information sur un film sensible à la lumière, caractérisé en ce qu'il comprend :

a) la fourniture d'un support muni d'un film multicouche sensible à la lumière tel que défini selon l'une quelconque des revendications 1 à 5 ; et
b) la synthèse par irradiation laser d'un composé $A_nB_m$ constitué à partir des éléments A et B des couches dudit film en proportions stoechiométriques, ledit composé $A_nB_m$ ainsi formé se présentant sous forme de taches circulaires et de contraste optique C au moins égal à 0,5, et de préférence au moins égal à 0,8.

Le procédé selon l'invention utilise pour l'étape b) de synthèse l'irradiation par laser du procédé décrit dans les brevets EP0045551 et EP0048514 du présent demandeur. Ce procédé est unique en ce sens qu'il prend origine dans l'absorption instantanée de l'énergie optique au cours de l'interaction des photons avec les électrons de valence dans le film irradié par le faisceau laser.

Bien que des phonons soient créés au cours de cette interaction et que de la chaleur soit générée, le procédé n'est pas conduit par des considérations d'équilibre thermodynamique. C'est en effet un procédé hors-équilibre qui n'est pas basé les lois classiques de la diffusion atomique. Aucune source thermique de chaleur classique ne peut en effet simuler la montée brutale de l'intensité de toute source laser (< $10^{-4}$ s), comme par exemple celle produite par l'absorption de la lumière émise par une diode laser ($10^{-6}$ s).

Dans la présente invention, le film sensible à la lumière qui est déposé sur le substrat en polycarbonate est constitué d'un empilement de deux couches élémentaires contenant des atomes A et B respectivement. Les contenus atomiques de ces couches élémentaires et leurs épaisseurs respectives sont tels que la proportion entre les atomes A et B correspond à la composition stoechiométrique d'un composé donné qui serait formé avec de tels atomes A et B, par exemple la proportion 2/3 pour le composé $A_2B_3$.

En irradiant avec un faisceau laser l'empilement des deux couches, une ou les deux couches peuvent être amenées à fondre très rapidement au cours de l'irradiation, promouvant ainsi une migration très rapide, dite balistique, des atomes au travers de l'interface des deux couches. Les atomes appartenant à l'origine à l'une ou à chacune des deux couches se mélangent avant qu'aucune réaction interatomique (par exemple pour former des liaisons covalentes) ne puisse s'établir. En fonction du choix des atomes A et B (leurs types et leur proportion), cette migration inter=atomique peut résulter en soit un alliage métallique homogène, soit un composé ainsi synthétisé.

En plus d'un contraste optique élevé et d'une stabilité morphologique optimale, la synthèse d'un composé induite par irradiation laser offre des avantages spécifiques. En effet, les matériaux dits composés sont caractérisés par des liaisons interatomiques fortes (covalentes ou ioniques).

En ce qui concerne leurs propriétés optiques, et pour chaque matériau composé, ce type de liaison se traduit par un seuil d'absorption optique à une énergie photonique particulière qui est caractéristique du composé. Cette énergie définit $E_G$ le seuil d'absorption du composé. C'est l'énergie minimale requise pour permettre à ce composé d'absorber des photons.

En conséquence, ces composés peuvent être soit semi-transparents, soit éventuellement opaques à la lumière monochromatique émise par la diode de lecture.

A titre de composés $A_nB_m$ pouvant être synthétisés par irradiation laser, on peut notamment citer l'Antimoniure d'aluminium (AlSb, $E_G$ = 1.6 eV), le tellurure de Cadmium (CdTe, $E_G$ = 1,49 eV), le Séléniure de Cadmium (CdSe, $E_G$ = 1,73 eV).

En fonction du choix de la longueur d'onde de travail de la diode de lecture, la synthèse induite par irradiation laser d'un composé spécifique $A_nB_m$ peut conduire à un contraste C très élevé entre la réflectivité élevée d'un métal, c'est-à-dire celle du film vierge d'aluminium Al avant irradiation par laser, et la réflectivité des taches irradiées par laser qui sont constitués du matériau composé synthétisé.

Pour obtenir le contraste le plus élevé, il est intéressant de se concentrer sur les composés qui absorbent totalement la lumière émise par la diode de lecture, c'est-à-dire le choix le plus approprié d'à la fois i) le type d'éléments atomiques, et ii) leur proportion pour atteindre cet objectif.

Atteindre le contraste C le plus élevé a des avantages particuliers: i) la dimension des taches transformées distribuées le long de la piste elliptique peut être réduite, et ii) la détection d'une tache peut être plus rapide. En d'autres termes, sur un disque CD-R standard de diamètre 12,5 cm, le volume de l'information enregistrée peut être plus grand et sa lecture peut être plus rapide.

La stabilité morphologique et l'intégrité du film sensible décrit plus haut doivent être établies à la fois avant et après l'intégration de l'information sur le disque. Cette stabilité peut être perturbée de deux façons:

i) par la migration d'espèces étrangères (par exemple de l'eau) le long de l'interface entre le film et la surface du support en polycarbonate, et
ii) par le mélange prématuré (à température ambiante ou faible) des matériaux élémentaires au travers de l'interface entre les deux couches qui forment le film sensible.

Par ailleurs, en plus de l'écriture à contraste élevé, le procédé de synthèse par irradiation laser d'un composé spécifique $A_nB_m$ peut être utilisé pour sceller de façon sûre le film vierge vis-à-vis de l'ambiant et par exemple empêcher la migration d'eau à l'interface entre film et support. En effet, la synthèse d'un composé est un procédé exothermique. Une fois que la fusion est initiée par l'absorption de la lumière du laser, la synthèse du composé se développe par elle-même au travers de tout le volume du film sensible maintenant constitué d'un mélange homogène d'atomes A et B, cette synthèse générant simultanément de la chaleur qui diffuse hors du film. En ramollissant la surface du polycarbonate, cette chaleur aide à faire adhérer très fortement le composé synthétisé sur le support, au point que le film ainsi transformé ne peut pas être retiré par pelage du support.

Le scellement complet du film vierge d'un support selon l'invention, comportant un orifice en son centre adapté au montage dudit support dans un lecteur, est réalisé en balayant le faisceau d'une diode laser d'écriture le long de deux cordons d'un composé synthétisé par irradiation laser et de largeur supérieure ou égale à 1 μm, lesdits cordons se répartissant comme suit :

■ un premier cordon en bordure externe de la surface du film (de l'ordre de 12 cm de diamètre dans le cas d'un CD-R circulaire), et

■ un deuxième cordon en bordure interne du même film (de l'ordre de 4 cm de diamètre dans le cas d'un CD-R circulaire),

lesdits cordons étant disposés à une distance comprise entre 1 mm et 2 mm desdites bordures.

Le scellement est installé avant tout usage du disque CD-R.

Toute diffusion atomique de type thermodynamique est nécessairement lente. C'est le cas d'une diffusion atomique à faible température (par exemple à température ambiante) au travers de l'interface entre les deux couches du film sensible. Au cours d'une telle diffusion lente, des liaisons covalentes ont le temps de se former, provoquant la formation d'une couche (barrière) très mince de composé qui bloque toute migration lente supplémentaire d'atomes. En conséquence, les surfaces non-traitées par le laser d'écriture demeurent vierges, une situation qui ne peut être modifiée de façon drastique que par l'irradiation laser et la migration rapide d'atomes qui en résulte.

D'autre part, le composé ainsi synthétisé est homogène et très stable. Il ne peut plus se décomposer et retourner à la forme originale de l'empilement métallique des deux couches individuelles. En d'autres termes, l'écriture de l'information sous la forme de la suite codée de taches est un procédé irréversible.

L'intégrité du film est assurée à la fois, avant et après écriture de l'information sur le CD-R. En particulier, l'accès à l'incorporation d'une information sur tout CD-R vierge est maintenu sur des périodes de temps très étendues.

Les éléments atomiques A et B du composé spécifique $A_nB_m$ sont distribués sur le Tableau Périodique des Eléments, de part et d'autre de la 4ème Colonne :

- composés constitués d'éléments des groupes III et V ou VI, (par exemple AlSb ou AlTe), et
- composés constitués d'éléments des groupes II et VI (par exemple CdTe).

Parmi les composés $A_nB_m$ qui sont synthétisés par irradiation laser, les Tellurures d'Aluminium ($Al_2Te_3$ et AlTe) ont des avantages spécifiques quoiqu'ils ne soient pas étudiés ou même répertoriés:

- les deux tellurures d'Aluminium ont un seuil d'absorption optique dans l'infrarouge de 1,0 eV :

  o ces composés absorbent totalement la lumière du visible et sont noirs ;
  o comme la couche extérieure du film sensible est faite d'Aluminium, métal à haute réflectivité dans le visible, l'information qui est enregistrée sur le film présente un contraste C très élevé :

(0,85 -0,10) / 0.85 + 0.10) = 0.79 pour tout système de lecture travaillant dans le visible, cette valeur étant très supérieure à celle pratiquée avec les CD-R contemporains (de l'ordre de 0,2 à 0,30 typiquement),

- ces composés incorporent l'Aluminium (Al), un constituant standard qui est largement utilisé dans l'industrie des médias CD.

Enfin, la présente invention a encore pour objet un procédé pour protéger indéfiniment l'intégrité physique du film sensible du support d'information enregistrable selon l'invention, ledit support étant éventuellement circulaire et comportant un orifice en son centre adapté au montage dudit support dans un lecteur,
ledit procédé étant caractérisé en ce qu'il comporte une étape de scellement de la partie utile du film sur son support, en gravant deux cordons continus d'un composé synthétisé par irradiation laser et de largeur de préférence supérieure ou égal à 1 μm, cette étape de scellement étant réalisée avant toute utilisation, le film étant de ce fait encore vierge, lesdits cordons délimitant la partie utile du film et se répartissant comme suit :

- un premier cordon en bordure externe de la partie utile du film, et
- un deuxième cordon en bordure interne de cette même partie utile du film (qui est avantageusement disposé autour de l'orifice central du support dans le cas d'un support circulaire),
- lesdits cordons étant disposés à une distance comprise entre 1 mm et 2 mm desdites bordures.

De manière avantageuse,

Le support du film sensible peut avoir une géométrie quelconque, par exemple circulaire, carrée ou rectangulaire, cette géométrie étant distribuée sur une surface plane ou courbe, la partie utile du film étant délimitée et protégée par un ou plusieurs cordons gravés à la périphérie de la partie utile du film.

Ce procédé de protection infinie de l'intégrité physique du film sensible permet de fabriquer et commercialiser tout support d'information de type CD-R sur lequel une information peut être gravée de façon entièrement sécurisée et légalement sûre, à durée de vie supérieure (mais non limitée) à 25 ans, comme illustré dans les exemples ci-après.

**EXEMPLES**

EXEMPLE 1

Une couche d'Antimoine (Sb) est déposée sur une plaque de verre, puis est couverte d'une couche d'Aluminium (Al), elle-même recouverte d'une couche de Sb et finalement d'une nouvelle couche d'Al.

Toutes ces couches ont chacune la même épaisseur (20 nm) et forment un film sensible a la lumière.

L'empilement de ces couches formant le film est irradié par un faisceau laser continu CW Argon travaillant à une longueur d'onde de 500 nm, puissance 20 mW, pendant 10 secondes sur une surface de 0,5 mm de diamètre.

Après irradiation, la surface irradiée est semi-transparente et présente une couleur orange, ce qui démontre la transformation de l'empilement Al/Sb en un composé AlSb.

EXEMPLE 2

Une couche de Sb est déposée sur une plaque de verre, puis est couverte d'une couche d'Al, les deux couches ayant chacune une épaisseur de 20 nm, l'ensemble formant un film sensible à la lumière.

La réflectivité du film est forte dans le visible et correspond à celle de la couche externe en Al. En irradiant ce film avec une diode laser monochromatique (de puissance 10 mW) pendant $10^{-5}$ s, il y a formation du composé AlSb dans la zone irradiée, ce qui ouvre une fenêtre optique dans le film métallique. Le contraste optique de lecture C de cette fenêtre est égal à 0,43.

EXEMPLE 3 (COMPARATIF)

Une couche de Cadmium, d'une épaisseur de 40 nm, est déposée sur un substrat de polycarbonate.

Cette couche est ensuite recouverte d'une couche de tellure, également d'une épaisseur de 40 nm.

L'irradiation de l'ensemble des deux couches formant le film sensible à la lumière, a l'aide d'un faisceau laser CW, provoque la synthèse du composé CdTe qui absorbe la lumière en dessous de 620 nm.

Le contraste optique C entre les zones non-irradiées du film et celles qui ont été irradiées est de 0,33, démontrant l'importance du choix des éléments choisis pour former la couche sensible. Conservée à l'ambiant pendant une période de 25 ans, la couche conserve un contraste inchangé à 0,33.

EXEMPLE 4

Une couche de Tellure (Te) est déposée sur un substrat en polycarbonate, puis cette couche de Te est elle-même recouverte d'une couche d'Al.

Les deux couches ont la même épaisseur de 20 nm et leur empilement forme un film sensible à la lumière.

L'irradiation laser du film ainsi formé est réalisée pendant $10^{-6}$ s, avec une diode laser émettant dans le proche infrarouge (690 nm) avec une puissance de 10 mW.

Après irradiation, la zone irradiée est totalement noire, avec un contraste optique C égal à 0,80.

EXEMPLE 5

Une couche de Tellure (Te) d'épaisseur 20 nm est déposée sur un substrat en polycarbonate, puis cette couche de Te est couverte successivement d'une couche d'Al d'épaisseur 15 nm, puis d'une couche de Te de 20 nm d'épaisseur et finalement avec d'une couche d'Al d'épaisseur 15 nm formant la couche supérieure de l'empilement.

L'empilement de ces couches forme le film sensible à la lumière, qui est ensuite irradié par le même faisceau laser que celui utilisé dans l'exemple 4. La zone irradiée est alors gris, avec un contraste optique C égal à 0.54, inférieur au contraste obtenu dans l'exemple 4 dans lequel les couches d'Al et de Te ont la même épaisseur.

EXEMPLE 6

Un film formé de deux couches comme dans l'exemple 4 est maintenu à température ambiante (24°C) pendant 8 ans. Son contraste C est alors réévalué et est mesuré à 0,80.

EXEMPLE 7

Un film identique à celui produit pour l'exemple 4 est porté à 50°C pendant 48 heures et son contraste C est alors réévalué à 0,80, sans changement depuis son irradiation.

EXEMPLE 8

L'interface entre film et substrat en polycarbonate peut né pas être étanche à la migration d'eau au cours du temps. Quand celle-ci se développe, un vieillissement du film est habituellement observé qui se caractérise par un décollement du film ce qui modifie et atténue le contraste d'écriture.

Une expérience a été réalisée qui consiste à programmer le déplacement d'un film fabriqué suivant le procédé selon l'invention en regard d'un faisceau laser fonctionnant en continu (CW) de telle façon à réaliser l'écriture soit d'un anneau continu de matière transformée, soit d'un anneau incomplet, c'est-à-dire discontinu.

Dans le premier cas, une zone isolée du film est délimitée par l'anneau, zone qui est totalement séparée du reste du film qui se trouve hors de l'anneau.

Dans le second cas, l'anneau est discontinu et la zone du film située à l'intérieur de l'anneau reste en contact avec la partie du film localisée principalement hors de l'anneau.

L'évolution de l'aspect du film non-irradié, en deçà et au delà de l'anneau continu ou discontinu a été suivie périodiquement Très rapidement, soit 5 semaines après la réalisation de ces deux types d'écriture, l'observation montre que:

a) la partie du film qui est entièrement contenue dans l'anneau continu ne s'est pas modifiée au cours du temps et conserve le même contraste élevé vis-à-vis de la zone transformée par le laser et qui matérialise l'anneau lui-même;

b) la zone du film qui est contenue dans l'anneau discontinu a le même aspect que la zone du film située hors de l'anneau, ces deux zones présentant un contraste très atténué vis-à-vis de l'anneau lui-même.

EXEMPLE 9

Un film identique à celui produit pour l'exemple 3 (deux couches superposées de Cadmium puis de Tellure) a été irradié par le faisceau d'un laser fonctionnant en continu (CW) dans l'infrarouge (690 nm), le long d'une trace circulaire continue de diamètre 2cm et de largeur de trace 1mm, cette trace matérialisant un anneau de matière transformée suivant le compose CdTe.

Dans la zone du film qui est entièrement contenue dans l'anneau ainsi réalisé, une série de taches de matière transformée (composé CdTe) est alors réalisée à intervalle régulier de 0,1 mm en déplaçant le film perpendiculairement à l'axe du faisceau laser, l'irradiation étant réalisée par une diode laser travaillant pendant une période de temps très courte ($10^{-6}$s). Chaque tache est limitée à une zone circulaire de diamètre 0,1 mm en focalisant le faisceau laser. Cette écriture à contraste élevé (0.33) a été ensuite suivie périodiquement sur une période de 25 ans afin d'évaluer la durabilité de son contraste.

Après 25 ans d'évaluation, on constate que ce contraste est intégralement maintenu, et que les taches de matière transformée sont toujours bien définies avec leur diamètre nominal de 0,1mm à 0,1 mm d'intervalle. Ce résultat est obtenu grâce à la protection exercée par l'anneau de matière transformée qui entoure la zone d'écriture.

**Revendications**

1. Support d'information enregistrable comprenant un disque plat en polycarbonate présentant deux faces principales,_ et un film sensible à la lumière recouvrant l'une desdites faces principales et sur lequel de l'information peut être enregistrée, dans lequel le film est un film multicouche comprenant au moins deux couches élémentaires superposées respectivement composées d'un élément A et d'un élément B, lesdites couches se répartissant comme suit :

• l'une des couches étant constituée d'aluminium,
• tandis que l'autre couche est une couche de tellure ou d'antimoine, et

l'épaisseur de chaque couche étant sensiblement identique et l'épaisseur totale du film sensible à la lumière étant d'au moins 35 nm, ledit support étant **caractérisé en ce que** la couche extérieure du film multicouche est une couche d'aluminium.

2. Support selon la revendication 1, **caractérisé en ce que** le film multicouche est constitué de la superposition de deux couches élémentaires ayant chacune une épaisseur comprise entre 18 et 30 nm.

3. Support selon la revendication 1 ou 2, **caractérisé en ce que** le film multicouche est constitué de deux couches ayant chacune une épaisseur de 20 nm, se répartissant comme suit à partir du disque plat en polycarbonate :

- une couche inférieure de tellure ou d'antimoine, qui recouvre le disque plat, et
- une couche supérieure d'aluminium recouvrant complètement ladite couche inférieure.

4. Support selon la revendication 1, **caractérisé en ce que** le film multicouche est constitué de quatre couches élémentaires ayant chacune une épaisseur de 10 nm.

5. Support selon la revendication 4, **caractérisé en ce que** le film multicouche est constitué de quatre couches se répartissant comme suit à partir du disque plat en polycarbonate :

- une couche inférieure de tellure, qui recouvre le disque plat,
- une première couche intermédiaire d'aluminium recouvrant complètement ladite couche inférieure de tellure,
- une deuxième couche intermédiaire de tellure, recouvrant complètement la première couche intermédiaire d'aluminium, et
- une couche supérieure d'aluminium, recouvrant complètement la deuxième couche intermédiaire de tellure.

6. Procédé pour enregistrer de manière sécurisée et durable une information sur un film sensible à la lumière, **caractérisé en ce qu'**il comprend :

a) la fourniture d'un support muni d'un film multicouche sensible à la lumière tel que défini selon l'une quelconque des revendications 1 à 5, ledit film ; et
b) la synthèse par irradiation laser d'un composé $A_nB_m$ covalent constitué à partir des éléments A et B des couches dudit film en proportions stoechiométriques, ledit composé $A_nB_m$ ainsi formé se présentant sous forme de taches d'apparence circulaire et de contraste optique C au moins égal à 0,5, de préférence au moins égal à 0,8.

**7.** Procédé pour sceller le film sensible d'un support tel que défini selon l'une quelconque des revendications 1 à 5 et comportant un orifice en son centre adapté au montage dudit support dans un lecteur, ledit procédé comprenant la production de deux cordons d'un composé synthétisé par irradiation laser et de largeur égale ou supérieure à 1 μm, lesdits cordons se répartissant comme suit :

• un premier cordon en bordure externe de la surface du film, et
• un deuxième cordon en bordure interne du même film, lesdits cordons étant, disposés à une distance comprise entre 1 mm et 2. mm desdites bordures.

**8.** Procédé pour protéger indéfiniment l'intégrité physique du film sensible du support d'information enregistrable tel que défini selon l'une quelconque des revendications 1 à 5, ledit support étant éventuellement circulaire et comportant un orifice en son centre adapté au montage dudit support dans un lecteur, ledit procédé étant **caractérisé en ce qu'** il comporte une étape de scellement de la partie utile du film sur son support, en gravant deux cordons continus d'un composé synthétisé par irradiation laser et de largeur de préférence supérieure ou égale à 1 μm, cette étape de scellement étant réalisée avant toute utilisation, le film étant de ce fait encore vierge, lesdits cordons délimitant la partie utile du film et se répartissant comme suit :

- un premier cordon en bordure externe de la partie utile du film, et
- un deuxième cordon en bordure interne de cette même partie utile du film, lesdits cordons étant disposés à une distance comprise entre 1 mm et 2 mm desdites bordures.

**Patentansprüche**

**1.** Beschreibbarer Informationsträger, eine flache Scheibe aus Polycarbonat, die zwei Hauptflächen aufweist, und einen lichtempfindlichen Film umfassend, der eine der besagten Hauptflächen bedeckt und der mit Information beschrieben werden kann, wobei der Film ein mehrschichtiger Film ist, der zumindest zwei überlagerte Elementarschichten umfasst, die sich jeweils aus einem Element A und einem Element B zusammensetzen, wobei sich die besagten Schichten wie folgt verteilen:

- eine der Schichten besteht aus Aluminium,

- während die andere Schicht eine Schicht aus Tellur oder Antimon ist, und

die Dicke einer jeden Schicht in etwa identisch ist und die Gesamtdicke des lichtempfindlichen Films zumindest 35 nm beträgt, wobei der besagte Träger **dadurch gekennzeichnet ist, dass** die äußere Schicht des mehrschichtigen Films eine Aluminiumschicht ist.

**2.** Träger nach Anspruch 1, **dadurch gekennzeichnet, dass** der mehrschichtige Film aus der Überlagerung von zwei Elementarschichten besteht, die jeweils eine Dicke zwischen 18 und 30 nm aufweisen.

**3.** Träger nach Anspruch 1 oder 2, **dadurch gekennzeichnet, dass** der mehrschichtige Film aus zwei Schichten besteht, die jeweils eine Dicke von 20 nm aufweisen, und die sich wie folgt ab der flachen Scheibe aus Polycarbonat verteilen:

- eine untere Schicht aus Tellur oder aus Antimon, die die flache Scheibe bedeckt, und
- eine obere Schicht aus Aluminium, die die besagte untere Schicht vollständig bedeckt.

**4.** Träger nach Anspruch 1, **dadurch gekennzeichnet, dass** der mehrschichtige Film aus vier Elementarschichten besteht, die jeweils eine Dicke von 10 nm aufweisen.

**5.** Träger nach Anspruch 4, **dadurch gekennzeichnet, dass** der mehrschichtige Film aus vier Schichten besteht, die sich wie folgt ab der flachen Scheibe aus Polycarbonat verteilen:

- eine untere Schicht aus Tellur, die die flache Scheibe bedeckt,
- eine erste Zwischenschicht aus Aluminium, die die besagte untere Schicht aus Tellur vollständig bedeckt,
- eine zweite Zwischenschicht aus Tellur die die erste Zwischenschicht aus Aluminium vollständig bedeckt, und
- eine obere Schicht aus Aluminium, die die zweite Zwischenschicht aus Tellur vollständig bedeckt.

**6.** Verfahren zum sicheren und nachhaltigen Beschreiben eines lichtempfindlichen Films mit einer Information, **dadurch gekennzeichnet, dass** es folgendes umfasst:

a) die Bereitstellung eines Trägers, versehen mit einem mehrschichtigen lichtempfindlichen Film nach irgendeinem der Ansprüche 1 bis 5, dem besagten Film; und

b) die Synthese durch Laserbestrahlung einer kovalenten Verbindung $A_nB_m$, die aus den Elementen A und B der Schichten des besagten Films in stöchiometrischen Proportionen besteht, wobei sich die so gebildete besagte Verbindung $A_nB_m$ in Form von Flecken mit einem kreisförmigen Aussehen und einem optischen Kontrast C zumindest gleich 0,5, vorzugsweise zumindest gleich 0,8 darstellt.

7. Verfahren zum Versiegeln des empfindlichen Films eines Trägers nach irgendeinem der Ansprüche 1 bis 5, und eine Öffnung in seiner Mitte umfassend, die sich zur Montage des besagten Trägers in einem Lesegerät eignet, wobei das besagte Verfahren die Herstellung von zwei Bändern aus einer synthetischen Verbindung durch Laserbestrahlung und in einer Breite größer oder gleich 1 $\mu$m umfasst, wobei sich die besagten Bänder wie folgt verteilen:

- ein erstes Band am äußeren Rand der Oberfläche des Films, und
- ein zweites Band am inneren Rand desselben Films, wobei die besagten Bänder in einem Abstand zwischen 1 mm und 2 mm zu den besagten Rändern angeordnet sind.

8. Verfahren zum unbegrenzten Schutz der physischen Integrität des empfindlichen Films des beschreibbaren Informationsträgers nach irgendeinem der Ansprüche 1 bis 5, wobei der besagte Träger eventuell kreisförmig ist und in seiner Mitte eine Öffnung umfasst, die sich zur Montage des besagten Trägers in einem Lesegerät eignet, wobei das besagte Verfahren **dadurch gekennzeichnet ist, dass** es einen Schritt zum Versiegeln des Nutzabschnitts des Films auf seinem Träger umfasst, durch Gravieren von zwei durchgehenden Bändern aus einer synthetischen Verbindung durch Laserbestrahlung und in einer Breite von vorzugsweise größer oder gleich 1 $\mu$m, wobei dieser Schritt der Versiegelung vor jeder Verwendung durchgeführt wird, und der Film deswegen noch unberührt ist, wobei die besagten Bänder den Nutzabschnitt des Films begrenzen und sich wie folgt verteilen:

- ein erstes Band am äußeren Rand des Nutzabschnitts des Films, und
- ein zweites Band am inneren Rand dieses selben Nutzabschnitts des Films, wobei die besagten Bänder in einem Abstand zwischen 1 mm und 2 mm zu den besagten Rändern angeordnet sind.

**Claims**

1. Recordable information medium comprising a flat polycarbonate disk having two main faces, and a light sensitive film overlying one of said main faces and on which information may be recorded, wherein the film is a multilayer film comprising at least two elementary superposed layers respectively composed of an element A and an element B, said layers being distributed as follows:

• one of the layers being composed of aluminum,
• whereas the other layer is a layer of tellurium or antimony, and

the thickness of each layer being identical and the total thickness of the light-sensitive film being at least equal to 35 nm, said recordable information medium **characterized in that** the outer layer of the multilayer film is a layer of aluminum.

2. Medium according to Claim 1, **characterized in that** the multilayer film is composed of the superposition of two elementary layers each having a thickness between 18 and 30 nm.

3. Medium according to Claim 1 or 2, **characterized in that** the multilayer film is composed of two layers, each having a thickness of 20 nm , said layers being distributed as follows as from the flat polycarbonate disk:

- a lower layer of tellurium or antimony, which covers the flat disk, and
- an upper layer of aluminum completely covering said lower layer.

4. Medium according to Claim 1, **characterized in that** the multilayer film is composed of four elementary layers each having a thickness of about 10 nm.

5. Medium according to Claim 4, **characterized in that** the multilayer film is composed of four layers which are distributed as follows as from the flat polycarbonate disk:

- a lower layer of tellurium which covers the flat disk,
- a first intermediate layer of aluminum completely covering said lower layer of tellurium,
- a second intermediate layer of tellurium, completely covering the first intermediate layer of aluminum, and
- a top layer of aluminum, completely covering the second intermediate layer of tellurium.

6. Method for recording securely and durably information on a light-sensitive film, wherein said method comprises:

a) providing a medium having a light-sensitive multilayer film as defined in any one of claims 1 to 5, and

b) synthesizing by laser irradiation a covalent compound $A_nB_m$ made out of the elements A and B which are contained, in stoichiometric proportions, in the elemental layers of said light-sensitive film, said compound $A_nB_m$ forming circular spots, said spots having an optical contrast C equal at least to 0.5, and preferably at least equal to 0.8.

7. Method for sealing the sensitive film of a medium made as defined in any one of claims 1 to 5 and having an opening at its center adapted to mounting said medium in a reading drive, said method comprising the production of two traces made of a compound synthesized by laser irradiation and said traces having a width equal to or greater than 1 μm, said traces being distributed as follows:

- a first trace on the outer edge of the film surface, and
- a second trace on the inner border of the said film, said traces running at a distance of 1 to 2 mm from said edges.

8. A process for protecting indefinitely the physical integrity of the sensitive film of the recordable information medium as defined according to any one of claims 1 to 5, said medium being notably circular and having an opening at its center adapted for mounting said medium in a reading drive said process being **characterized in that** it comprises sealing of the usable part of the film on the medium, said sealing being performed by burning two continuous traces of a laser-synthesized compound, the width of such traces being preferably larger or equal to μm, this sealing being performed before any use, the film thus being still pristine, said traces setting the boundaries of the usable part of the film and being distributed as follows:

• a first trace along the outer edge of the usable part of the film, and
• a second trace along the inner border of the said usable part of the film, said traces running at a distance of 1 to 2 mm of said edges.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 11034501 B
- JP 2000187884 B
- JP 2000187884 A
- EP 0045551 A
- EP 0048514 A